# EUROPEAN PATENT SPECIFICATION

(11) **EP 2 977 490 B1**
(45) Date of publication and mention of the grant of the patent: **31.07.2019**
(21) Application number: 13878749.4
(22) Date of filing: 28.04.2013
(51) Int. Cl.: C25D 11/04, B29C 49/48, C25D 11/02, C25D 11/08, C25D 11/10, C25D 11/16, C25D 11/18, C03B 9/48

(54) **SURFACE HARDENING PROCESS OF ALUMINIUM ALLOY MOULD FOR BOTTLE BLOWING MACHINE**
OBERFLÄCHENHÄRTUNGSVERFAHREN FÜR EINE ALUMINIUMLEGIERUNGSFORM FÜR EINE FLASCHENBLASMASCHINE
PROCÉDÉ DE DURCISSEMENT DE SURFACE DE MOULE EN ALLIAGE D'ALUMINIUM POUR MACHINE DE GONFLAGE DE BOUTEILLES

(30) Priority: 19.03.2013 CN 201310088197
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); REN, Jianguo, Zhangjiagang Jiangsu 215624 (CN); WU, Hongmin, Zhangjiagang Jiangsu 215624 (CN); HE, Deping, Zhangjiagang Jiangsu 215624 (CN)
(74) Representative: Gulde & Partner
(86) International application number: PCT/CN2013/074966
(87) International publication number: WO 2014/146328

(56) References cited:
- EP-A1- 1 798 015
- EP-A1- 2 371 996
- WO-A1-2012/009797
- CN-A- 101 676 439
- CN-A- 101 974 774
- CN-A- 102 330 138
- JP-B2- 3 247 594
- US-A- 4 133 725
- ZHOU, YA ET AL.: 'Research on Technology of Hard Anodizing of Aluminium Alloy under Room Temperature' MATERIALS PROTECTION vol. 41, no. 7, 15 July 2008, page 34, XP008180647
- LI, XINQING ET AL.: 'Latest Development of Anodizing of Aluminium and Alloys thereof' MECHANIST METAL FORMING 09 September 2005, page 21, XP008180649

## Description

### Field of the Invention

The present invention relates to the field of a device for processing a beverage bottle, more particularly to a surface hardening process for an aluminum alloy mould of a bottle blowing machine.

### Description of the Related Art

During the working process of a bottle blowing machine, the mould which directly contacts a beverage bottle is one of the most serious parts of wear, particularly the surface of the cavity of the mould. In the course of ejecting of a strong airflow, the surface of the cavity of the mould is easy to wear to form a recess, and the recess will have adverse effects on the beverage bottle because the surface of the cavity of the mould is in contact with the surface of the beverage bottle. Thus, the wear-resistance of the cavity directly determines the quality of the beverage bottle. EP1798015A1 relates to a fluoropolymer resin coated member for forming polyester resin container in shape of bottle, cup or tray capable of filling contents such as tea, water, juice, alcohol and coffee and so on, to a metal mold for the container using the member, and to a reproducing method of the metal mold. EP2371996A1 relates to a method of forming a ceramic film on a surface of metal by electrolytic treatment, and an electrolysis solution that may be advantageously used to electrolytically coating the metal with the ceramic film.

### Summary of the Invention

An object of the invention is to provide a surface hardening process for an aluminum alloy mould of a bottle blowing machine.

For the foregoing purpose, the following technical solution is utilized in the invention: A surface hardening process for an aluminum alloy mould of a bottle blowing machine, comprising steps of:
(a) polishing a cavity surface of the aluminum alloy mould, and putting the polished aluminum alloy mould into an oxidation tank containing an electrolyte to perform a hard anodic oxidation treatment,
   wherein an oxidation layer is formed on the surface of the cavity of the aluminum alloy mould after the oxidation treatment,wherein the hard anodic oxidation treatment utilizes an oxidation electric current superposed by an alternating current, a direct current and a pulse current, wherein a current density of the alternating current is 0.5-3.5 A/dm² and a current density of the direct current is 0.2-4.5 A/dm², a frequency of the pulse current is 40-60 Hz, and a duty cycle of the pulse current is 20-60%, the electrolyte being a mixed solution including an inorganic acid and an organic acid;
(b) coating a grease film on the parting line at the edge of the cavity of the aluminum alloy mould after the oxidation treatment; and
(c) polishing the cavity surface of the aluminum alloy mould after the oxidation treatment.

Preferably, in the step (a) the inorganic acid is sulfuric acid.

More preferably, in the step (a) the inorganic acid has a mass concentration of 7%-19% itself.

Preferably, in the step (a) the organic acid is 2-hydroxyacetic acid.

More preferably, in the step (a) the organic acid has a mass concentration of 4%-6% itself.

Preferably, in the step (a) the temperature in the oxidation tank is -8∼-2 °C.

Preferably, the thickness of the oxidation layer is 30-80 µm.

Due to the above technical solution, the present invention has the following advantages as compared with the prior art: in the invention, a hardened layer is formed by oxidation on the surface of the cavity of the aluminum alloy mould, such that the cavity surface is more wear-resisting and more resistant to corrosion, and the hardened layer is firmly bonded to the cavity surface and not easy to fall off.

### Brief Description of the Drawings

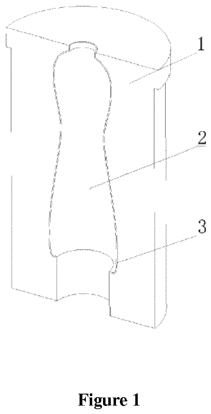

Fig.1 is a schematic drawing of an aluminum alloy mould of the invention.

### List of Reference Signs

- 1: aluminum alloy mould;
- 2: cavity;
- 3: oxidation layer.

### Description of the Preferred Embodiments

The invention will be further illustrated in more detail in connection with accompanying drawings and embodiments.

A surface hardening process for an aluminum alloy mould 1 (shown in Fig. 1) of a bottle blowing machine, comprise the following steps:
(a) polishing the surface of the cavity 2 of the aluminum alloy mould 1, and putting the polished aluminum alloy mould 1 into an oxidation tank having a low temperature of -8∼-2 °C and containing an electrolyte, to perform a hard anodic oxidation treatment.
   The oxidation electric current utilized by the oxidation treatment is superposed by an alternating current with a current density of 0.5-3.5 A/dm², a direct current with a current density of 1.2-4.5 A/dm² and a pulse current. The current density of the alternating current and the direct current is 0.5-3.5 A/dm² and 0.2-4.5 A/dm², respectively. The frequency of the pulse current is 40-60 Hz, and the duty cycle is in the range of 20-60%. Thereby, the growth speed and structure of the oxidation layer would be controlled.
   The electrolyte is a mixed solution of sulfuric acid with a mass concentration of 18% itself and 2-hydroxyacetic acid with a mass concentration of 5% itself.
(b) coating a weak conductive film on a parting line at the edge of the cavity 2 of the aluminum alloy mould 1 after the oxidation treatment, the weak conductive film is a weak conductor formed by grease.
(c) polishing the surface of the cavity 2 of the aluminum alloy mould after the oxidation treatment.

After oxidation, an oxidation layer 3 with a thickness of 30-80 µm is formed on the surface of the cavity 2 of the aluminum alloy mould 1. In this embodiment, the thickness of the formed oxidation layer is 60 µm, wherein a half of the oxidation layer is permeated into the aluminum alloy substrate, and the other half of the oxidation layer is grown out, thus, the oxidation layer is bonded to the substrate very firmly and is not easy to fall off. Furthermore, the surface hardness of the oxidation layer can be up to HV300-500, so that the oxidation layer has high wear resistance and high corrosion-resistance.

The above embodiment is described for illustrating the technical concept and features of the invention, the aim is intended to enable a person skilled in the art to appreciate the content of the invention and further implement it, and the protecting scope of the invention can not be limited hereby. Also, any equivalent variations or modifications made according to the invention should be covered within the protecting scope of the invention as defined by the appended claims.

## Claims

1. A surface hardening process for an aluminum alloy mould (1) of a bottle blowing machine, comprising steps of:
(a) polishing a surface of a cavity (3) of the aluminum alloy mould (1), and putting the polished aluminum alloy mould (1) into an oxidation tank containing an electrolyte to perform a hard anodic oxidation treatment,
wherein an oxidation layer (2) is formed on the surface of the cavity (3) of the aluminum alloy mould (1) after the oxidation treatment,
wherein the hard anodic oxidation treatment utilizes an oxidation electric current superposed by an alternating current, a direct current and a pulse current, wherein a current density of the alternating current is 0.5-3.5 A/dm² and a current density of the direct current is 0.2-4.5 A/dm², a frequency of the pulse current is 40-60 Hz, and a duty cycle of the pulse current is 20-60%, the electrolyte being a mixed solution including an inorganic acid and an organic acid;
(b) coating a grease film on the parting line at an edge of the cavity (3) of the aluminum alloy mould (1) after the oxidation treatment; and
(c) polishing the surface of the cavity (3) of the aluminum alloy mould (1) after the oxidation treatment.

2. The surface hardening process as claimed in claim 1, wherein, in step (a) the inorganic acid is sulfuric acid.

3. The surface hardening process as claimed in claim 1 or 2, wherein, in the step (a) the inorganic acid has a mass concentration of 7%-19%.

4. The surface hardening process as claimed in claim 1, wherein, in step (a) the organic acid is 2-hydroxyacetic acid.

5. The surface hardening process as claimed in claim 1 or 4, wherein, in step (a) the organic acid has a mass concentration of 4%-6%.

6. The surface hardening process according to any one of the preceding claims, wherein, in step (a) the temperature in the oxidation tank is -8 °C to -2 °C.

7. The surface hardening process according to any one of the preceding claims, wherein the thickness of the oxidation layer (2) is 30-80 µm.

## Patentansprüche

1. Ein Oberflächenhärtungsverfahren für eine Aluminiumlegierungsform (1) einer Flaschenblasmaschine, aufweisend die folgenden Schritte:
(a) Polieren einer Oberfläche eines Hohlraums (3) der Aluminiumlegierungsform (1) und Stellen der polierten Aluminiumlegierungsform (1) in einen Oxidationsbehälter, der einen Elektrolyt aufweist, um eine hartanodische Oxidationsbehandlung durchzuführen,
wobei nach der Oxidationsbehandlung eine Oxidationsschicht (2) auf der Oberfläche des Hohlraums (3) der Aluminiumlegierungsform (1) ausgebildet wird,
wobei die hartanodische Oxidationsbehandlung einen elektrischen Oxidationsstrom, der von einem Wechselstrom, einem Gleichstrom und einem Pulsstrom überlagert wird, verwendet, wobei eine Stromdichte des Wechselstroms 0,5-3,5 A/dm² beträgt und eine Stromdichte des Gleichstroms 0,2-4,5 A/dm² beträgt, eine Frequenz des Pulsstroms 40-60 Hz beträgt und ein Arbeitszyklus des Pulsstroms 20-60% beträgt, wobei der Elektrolyt eine gemischte Lösung, die eine anorganische Säure und eine organische Säure aufweist, ist;
(b) Aufbringen eines Fettfilms auf der Trennlinie an einem Rand des Hohlraums (3) der Aluminiumlegierungsform (1) nach der Oxidationsbehandlung; und
(c) Polieren der Oberfläche des Hohlraums (3) der Aluminiumlegierungsform (1) nach der Oxidationsbehandlung.

2. Das Oberflächenhärtungsverfahren nach Anspruch 1, wobei in Schritt (a) die anorganische Säure Schwefelsäure ist.

3. Das Oberflächenhärtungsverfahren nach Anspruch 1 oder 2, wobei in Schritt (a) die anorganische Säure eine Massenkonzentration von 7%-19% aufweist.

4. Das Oberflächenhärtungsverfahren nach Anspruch 1, wobei in Schritt (a) die organische Säure 2-Hydroxyessigsäure ist.

5. Das Oberflächenhärtungsverfahren nach Anspruch 1 oder 4, wobei in Schritt (a) die organische Säure eine Massenkonzentration von 4%-6% aufweist.

6. Das Oberflächenhärtungsverfahren nach einem der vorhergehenden Ansprüche, wobei in Schritt (a) die Temperatur im Oxidationsbehälter -8 °C bis -2 °C beträgt.

7. Das Oberflächenhärtungsverfahren nach einem der vorhergehenden Ansprüche, wobei die Dicke der Oxidationsschicht (2) 30-80 µm beträgt.

## Revendications

1. Un procédé de durcissement de surface d'un moule en alliage d'aluminium (1) d'une machine de gonflage de bouteilles, comprenant les étapes suivantes :
(a) polir une surface d'une cavité (3) du moule en alliage d'aluminium (1), et mettre le moule en alliage d'aluminium (1) poli dans un réservoir d'oxydation contenant un électrolyte pour effectuer un traitement d'oxydation anodique dure,
une couche d'oxydation (2) étant formée sur la surface de la cavité (3) du moule en alliage d'aluminium (1) après le traitement d'oxydation,
le traitement d'oxydation anodique dure utilisant un courant électrique d'oxydation superposé par un courant alternatif, un courant continu, et un courant pulsé, une densité de courant du courant alternatif étant de 0,5-3,5 A/dm² et une densité de courant du courant continu étant de 0,2-4,5 A/dm², une fréquence du courant pulsé étant de 40-60 Hz, et un cycle de marche du courant pulsé étant de 20-60%, l'électrolyte étant une solution mélangée comprenant un acide inorganique et un acide organique ;
(b) appliquer un film de graisse sur la ligne de séparation au niveau d'un bord de la cavité (3) du moule en alliage d'aluminium (1) après le traitement d'oxydation ; et
(c) polir la surface de la cavité (3) du moule en alliage d'aluminium après le traitement d'oxydation.

2. Le procédé de durcissement de surface selon la revendication 1, dans lequel, dans l'étape (a), l'acide inorganique est un acide sulfurique.

3. Le procédé de durcissement de surface selon les revendications 1 ou 2, dans lequel, dans l'étape (a), l'acide inorganique a une concentration massique de 7-19%.

4. Le procédé de durcissement de surface selon la revendication 1, dans lequel, dans l'étape (a), l'acide organique est de l'acide 2-hydroxyacétique.

5. Le procédé de durcissement de surface selon les revendications 1 ou 4, dans lequel, dans l'étape (a), l'acide organique a une concentration massique de 4-6%.

6. Le procédé de durcissement de surface selon les revendications précédentes, dans lequel, dans l'étape (a), la température dans le réservoir d'oxydation et compris entre -8 °C et -2 °C.

7. Le procédé de durcissement de surface selon l'une des revendications précédentes, dans lequel l'épaisseur de la couche d'oxydation (2) est de 30-80 µm.
